# EUROPEAN PATENT APPLICATION

(11) **EP 3 106 913 A1**
(43) Date of publication of application: **21.12.2016**
(21) Application number: 16174332.3
(22) Date of filing: 14.06.2016
(51) Int. Cl.: G02B 27/10, G02B 3/06, G02B 19/00

(54) **PROJECTOR**

(30) Priority: 15.06.2015 JP 2015120570
(71) Applicant: Funai Electric Co., Ltd., Daito-shi, Osaka 574-0013 (JP)
(72) Inventor: Okamoto, Kenji, Osaka, 574-0013 (JP)
(74) Representative: Becker Kurig Straus

(57) **Abstract**

A projector (2) is provided, having a light source (20) emitting a laser beam; an optical element (26), which the laser beam emitted by the light source (20) passes through; a projection component (40), projecting an image onto a projection surface (8) by irradiating the laser beam emitted from the optical element (26) onto the projection surface (8) while scanning. The optical element (26) has an incident surface (48), where the laser beam emitted by the light source (20) is incident; and an emitting surface (50), where the laser beam incident to the incidence surface (48) is emitted. A first lens surface (52), shaping a beam shape of the laser beam from elliptic into circular by astigmatism generated in the laser beam, is formed on one of the incident and the emitting surfaces (48, 50), and a second lens surface (54), converting the laser beam from a divergent beam into a parallel beam, is formed on the other one of the incident the emitting surfaces (50, 48).

## Description

### BACKGROUND OF THE DISCLOSURE

### Field of the Disclosure

The disclosure relates to a projector.

### Description of Related Art

A projector that projects a color image on to a projection surface by synthesizing a laser beam of a red component (R), a laser beam of a green component (G) and a laser beam of a blue component (B), and irradiating the synthesized laser beam on to the projection surface while scanning is known in the art (for example, refer to patent document 1, Japanese Laid Open Patent Publication No. 2011-197217).

A conventional projector includes a first laser diode for generating the laser beam of the red component, a second laser diode for generating the laser beam of the green component, a third laser diode for generating the laser beam of the blue component, a first to a third collimating lenses where the laser beams from the first to the third laser diodes are incident thereto respectively, and a dichroic mirror for synthesizing the laser beams that exit out of the first to the third collimating lenses. The first to the third collimating lenses convert the laser beams from the first to the third laser diodes from divergent beams into parallel beams.

Generally, a beam shape of the laser beam emitted from the laser diode is elliptic shaped. In a case where the laser beam having the elliptic shape beam shape is irradiated directly onto the projection surface, the display resolution of the image may deteriorate. Therefore, a shaping prism, for shaping the beam shape of the laser beam that is emitted out of the dichroic mirror from an elliptic shape into a circular shape, is disposed in the above mentioned conventional projector.

However, in the above mentioned conventional projector, a size of the shaping prism is relatively large. Therefore, a problem arises where the entire optical system including the shaping prism becomes larger and consequently the entire projector becomes larger.

In view of the above issues, the disclosure provides an optical element capable of shaping a beam shape of a laser beam while achieving miniaturization of an overall optical system, and provides a projector having the optical element.

### SUMMARY OF THE DISCLOSURE

A projector according to an embodiment of the disclosure includes a light source, an optical element and a projection component. The light source emits a laser beam. The optical element, which the laser beam emitted by the light source passes through, includes an incident surface where the laser beam emitted by the light source is incident, and an emitting surface where the laser beam incident to the incidence surface is emitted. The projection component projects an image onto a projection surface by irradiating the laser beam that is emitted from the optical element onto the projection surface while scanning. A first lens surface, which shapes a beam shape of the laser beam that is emitted by the light source from an elliptic shape into a circular shape by astigmatism generated in the laser beam that is emitted by the light source, is formed on one of the incident surface and the emitting surface. A second lens surface, which converts the laser beam that is emitted by the light source from a divergent beam into a parallel beam, is formed on the other one of the incident surface and the emitting surface.

According to the above embodiment, the first lens surface shapes the beam shape of the laser beam that is emitted by the light source from an elliptic shape into a circular shape (beam shaping function) by generating astigmatism in the laser beam that is emitted by the light source, and is formed on one of the incident surface and the emitting surface. The second lens surface, which converts the laser beam that is emitted by the light source from a divergent beam into a parallel beam (collimating function), is formed on the other one of the incident surface and the emitting surface. In this way, since the projector has both the beam shaping function and the collimating function, the number of components can be reduced in an overall optical system that includes the optical element in comparison with the conventional case of disposing the shaping prism and the collimating lens separately. As a result, the beam shape of the laser beam can be shaped while achieving miniaturization of the above mentioned overall optical system.

In the projector according to an embodiment of the disclosure, the incidence surface and the emitting surface are disposed to face oppositely with each other in an optical axis direction.

In the projector according to an embodiment of the disclosure, the beam shape of the laser beam emitted by the light source is shaped from the elliptic shape into the circular shape by expanding the beam shape of the laser beam emitted by the light source in a short axis direction.

According to the above embodiment, when the beam shape of the laser beam emitted by the light source is shaped from the elliptic shape into the circular shape, the beam shape of the laser beam is expanded in the short axis direction. In this way, the beam shape of the laser beam may be shaped while securing a size of the overall beam radius.

In the projector according to an embodiment of the disclosure, the laser beam shaped by the first lens surface is converted from a divergent beam into a parallel beam by being incident to the second lens surface.

In the projector according to an embodiment of the disclosure, the first lens surface is formed on the incident surface and the second lens surface is formed on the emitting surface.

According to the above embodiment, the laser beam condensation property by the second lens surface can be increased since the second lens surface is formed on the emitting surface.

In the projector according to an embodiment of the disclosure, the first lens surface is formed on the emitting surface and the second lens surface is formed on the incident surface.

In the projector according to an embodiment of the disclosure, a shape of the first lens surface is a cylindrical surface shape, and a shape of the second lens surface is a spherical shape or an aspherical shape.

According to the above embodiment, the first lens surface is made to have a beam shaping function since the first lens surface is a cylindrical surface shape. In addition, the second lens surface is made to have a collimating function since the second lens surface is a spherical shape or an aspherical shape.

In the projector according to an embodiment of the disclosure, the first lens surface has a curvature in a first direction that is orthogonal to the optical axis direction, and does not have a curvature in a second direction that is orthogonal to the optical axis direction and the first direction.

In the projector according to an embodiment of the disclosure, a shape of the first lens surface is a biconic surface shape, and a shape of the second lens surface is a spherical shape or an aspherical shape.

According to the above embodiment, the first lens surface is made to have a beam shaping function since the first lens surface is a biconic surface shape. In addition, the second lens surface is made to have a collimating function since the second lens surface is a spherical shape or an aspherical shape.

In the projector according to an embodiment of the disclosure, the first lens surface has a first radius of curvature in a first direction that is orthogonal to the optical axis direction, and has a second radius of curvature in a second direction that is orthogonal to the optical axis direction and the first direction, and the first radius of curvature and the second radius of curvature are different.

In the projector according to an embodiment of the disclosure, a ratio of the first radius of curvature and the second radius of curvature is greater than or equal to 1:5.

In the projector according to an embodiment of the disclosure, the first radius of curvature is +130 mm, and the second radius of curvature is +1380 mm.

In the projector according to an embodiment of the disclosure, a numerical aperture of the optical element is greater than or equal to 0.47.

According to the above embodiment, when a typical laser diode that emits, for example, a laser beam with a radiation angle θ of about 50° is adopted, the laser beam from the laser diode can be incident to the incident surface effectively. As a result, a utilization efficiency of the laser beam can be increased.

In the projector according to an embodiment of the disclosure, a lens effective diameter of the optical element is lesser than or equal to 3.5 mm.

According to the above embodiment, the miniaturization of the overall optical system can be achieved while the distance between the optical element and the light source is secured since the lens effective diameter of the optical element is less than or equal to 3.5 mm.

In the projector according to an embodiment of the disclosure, a lens thickness of the optical element from the incident surface to the emitting surface is less than or equal to 1.75 mm.

According to the above embodiment, the miniaturization of the overall optical system can be achieved while the distance between the optical element and the light source is secured since the lens thickness of the optical element is less than or equal to 1.75 mm.

In the projector according to an embodiment of the disclosure, a radius of curvature of the first lens surface in a first direction that is orthogonal to an optical axis direction is greater than or equal to 100 mm.

In the projector according to an embodiment of the disclosure, the optical element is fixed relative to the light source, such that the first direction of the first lens surface is aligned with a long axis direction of the beam shape of the laser beam, and the second direction of the first lens surface is substantially aligned with a short axis direction of the beam shape of the laser beam.

In the projector according to an embodiment of the disclosure, the light source and the optical element are respectively disposed in plural. The plurality of light sources emit laser beams respectively having different wavelengths, and the plurality of optical elements is disposed corresponding to each of the plurality of light sources.

According to the above embodiment, since each of the plurality of optical elements is disposed corresponding to each of the plurality of light sources, each of the laser beams can be synthesized after a beam shape of the laser beams from each of the plurality of light sources is shaped and the laser beams are converted from a divergent beam into a parallel beam.

A projector according to an embodiment of the disclosure may shape a beam shape of a laser beam while achieving miniaturization of the overall optical system.

### BRIEF DESCRIPTION OF THE DRAWINGS

FIG. 1 is to describe a configuration of a head up display device equipped with a projector according to a first embodiment.
FIG. 2 illustrates a display sample of an image by the head-up display device of FIG. 1.
FIG. 3 is a block diagram schematically illustrating a configuration of a projector according to a first embodiment.
FIG. 4 is a perspective view illustrating a first optical element according to a first embodiment.
FIG. 5 is a side view illustrating a first optical element according to a first embodiment.
FIG. 6 is a graph illustrating comparison results of the light condensation property when a second lens surface is formed at an emitting surface, and the light condensation property when a second lens surface is formed at an incidence surface.
FIG. 7 is a graph illustrating a relationship of a lens thickness of a first optical element with a lens effective diameter and with a radius of curvature of a second lens surface.
FIG. 8 is a side view illustrating a first optical element according to a second embodiment.
FIG. 9 is a perspective view illustrating a first optical element according to a third embodiment.
FIG. 10 is a side view illustrating a first optical element according to a third embodiment.

### DESCRIPTION OF THE EMBODIMENTS

Embodiments of the disclosure will be described in detail below accompanied by drawings. The embodiments described below are intended to illustrate a comprehensive or specific example. The numerical values, the shapes, the material, the components, the configuration and the connection form of the components set forth in the following embodiments are only examples, and should not be construed as limitations to the disclosure. In addition, regarding the components in the following embodiments, elements that are not recited in the independent claims are described as arbitrary components. Furthermore, each of the drawings do not necessarily illustrate the size or the dimension ratio and the like precisely.

### (Embodiment 1)

An optical element and a projector having the optical element according to a first embodiment is described below.

### [1-1. Configuration of Head-Up Display Device]

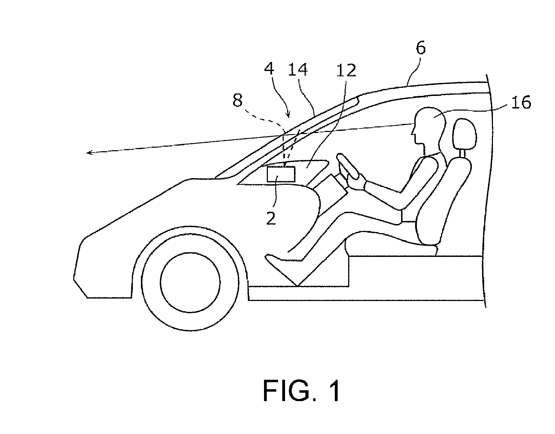

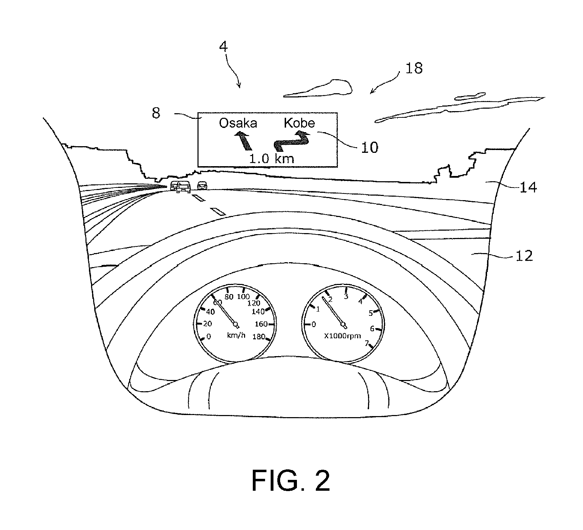

A projector 2 according to the first embodiment, for example, is mounted to a head-up display device 4. First, a configuration of the head-up display device 4 is described with reference to FIGs. 1 and 2. FIG. 1 is to describe a configuration of a head-up display device 4 equipped with the projector 2 according to a first embodiment. FIG. 2 illustrates a display sample of an image 10 by the head-up display device 4 of FIG. 1.

As shown in FIG. 1, the head-up display device 4, for example, is mounted to an automobile 6, and includes the projector 2 and a combiner 8 (also referred to as "projection surface 8" below). The projector 2 projects the image 10 onto the combiner 8, and is disposed in a dashboard 12 of the automobile 6. The combiner 8, for example, is constructed by a half mirror or such, and is disposed on a front glass 14 of the automobile 6.

The image 10 projected by the projector 2 is reflected towards a driver 16 by the combiner 8. In this way, as shown in FIG. 2, the driver 16 is able to view a virtual image, namely the image 10, that is superimposed on to a scenery 18 in front of the front glass 14. As a result, the driver 16 may visually recognize particular information without averting his/her vision while driving the automobile 6.

In addition, in the example shown in FIG. 2, information relating to car navigation (for example, information that displays the road splitting into a route towards Osaka and a route towards Kobe at a point 10 km from the current location) is displayed to the combiner 8 as the image 10.

### [1-2. Overall Configuration of a Projector]

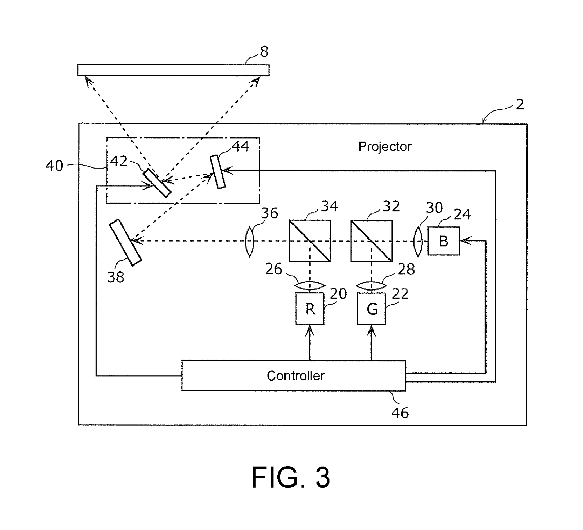

Next, an overall configuration of the projector 2 according to the first embodiment is described with reference to FIG. 3. FIG. 3 is a block diagram schematically illustrating a configuration of the projector 2 according to the first embodiment.

The projector 2 according to the first embodiment, is a laser projector that projects a color image 10 (refer to FIG. 2) onto the projection surface 8 by synthesizing laser beams of a red component (R), a green component (G) and a blue component (B), and irradiating the synthesized laser beam onto the projection surface 8 while scanning.

As shown in FIG. 3, the projector 2 includes a first laser diode 20, a second laser diode 22, a third laser diode 24, a first optical element 26, a second optical element 28, a third optical element 30, a first dichroic mirror 32, a second dichroic mirror 34, a lens 36, a mirror 38 and a projection component 40.

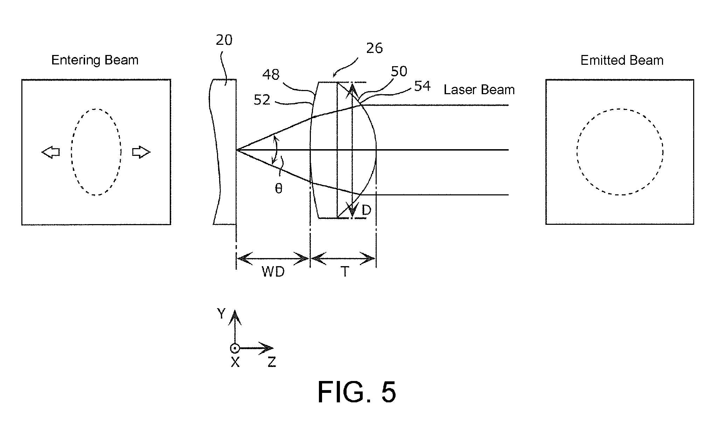

For example, each of the first laser diode 20, the second laser diode 22 and the third laser diode 24 is a light source that emits a laser beam of a monochromatic color with a particular wavelength. Specifically, the first laser diode 20 emits the laser beam of the red component, the second laser diode 22 emits the laser beam of the green component, and the third laser diode 24 emits the laser beam of the blue component. In addition, as shown in a later descried FIG. 5, the laser beams respectively emitted by the first laser diode 20, the second laser diode 22 and the third laser diode 24 are divergent beams, and the beam shapes thereof are elliptic shape. In the disclosure, "elliptic shape" does not only strictly mean elliptic shape, but also includes shapes that are substantially elliptic shape.

The first optical element 26, the second optical element 28 and the third optical element 30 are each an example of an optical element (lens) having a beam shaping function and a collimate function. The beam shaping function refers to shaping the beam shape of the laser beam from an elliptic shape to a circular shape. The collimate function refers to converting the laser beam from a divergent beam into a parallel beam. In the disclosure, "circular shape" does not only strictly mean circular shape, but also includes shapes that are substantially circularly shape.

The first optical element 26, the second optical element 28 and the third optical element 30 are disposed corresponding to the first laser diode 20, the second laser diode 22 and the third laser diode 24 respectively. That is to say, the first optical element 26 converts the laser beam from the first laser diode 20 from a divergent beam into a parallel beam, and shapes the beam shape of the laser beam emitted by the first laser diode 20 from an elliptic shape to a circular shape. Likewise, the second optical element 28 converts the laser beam emitted by the second laser diode 22 from a divergent beam into a parallel beam, and shapes the beam shape of the laser beam emitted by the second laser diode 22 from an elliptic shape to a circular shape. In addition, the third optical element 30 converts the laser beam emitted by the third laser diode 24 from a divergent beam into a parallel beam, and shapes the beam shape of the laser beam emitted by the third laser diode 24 from an elliptic shape to a circular shape. Furthermore, in the projector 2 according to the first embodiment, the first optical element 26, the second optical element 28 and the third optical element 30 have particular features. These configurations are described later.

The first dichroic mirror 32 and the second dichroic mirror 34 have optical characteristics of reflecting only a laser beam of a particular wavelength while allowing laser beams of other wavelengths to pass through. Specifically, the first dichroic mirror 32 reflects only the laser beam of the green component and allows the laser beams of other color components to pass through. The second dichroic mirror 34 reflects only the laser beam of the red component and allows laser beams of other color components to pass through.

The first dichroic mirror 32 is disposed at an upstream side of an optical path of the laser beam, and the second dichroic mirror 34 is disposed at a downstream side of the optical path of the laser beam. The laser beam of the green component from the second laser diode 22 is reflected by the first dichroic mirror 32 after passing through the second optical element 28. On the other hand, the laser beam of the blue component from the third laser diode 24 passes through the first dichroic mirror 32 after passing through the third optical element 30. In this way, the laser beam of the green component and the laser beam of the blue component are synthesized at the first dichroic mirror 32.

Furthermore, the laser beam of the red component from the first laser diode 20 is reflected by the second dichroic mirror 34 after passing through the first optical element 26. The laser beam of the green component and the laser beam of the blue component which are synthesized as mentioned above, pass through the second dichroic mirror 34. In this way, the laser beam of the red component, the laser beam of the green component and the laser beam of the blue component are synthesized at the second dichroic mirror 34.

The lens 36 is a light condensing lens for condensing the light of the laser beam that exits out of the second dichroic mirror 34. The mirror 38 is a reflecting plate for reflecting the laser beam that was condensed by the lens 36, towards the projection component 40.

The projection component 40 is for projecting the image 10 onto the projection surface 8 by irradiating the laser beam that is reflected by the mirror 38 onto the projection surface 8 while scanning. The projection component 40 has a first MEMS (micro electro mechanical systems) mirror 42 and a second MEMS mirror 44.

The first MEMS mirror 42 swings at a relatively high speed in a horizontal direction. The second MEMS mirror 44 swings at a relatively low speed in a vertical direction. The first MEMS mirror 42 and the second MEMS mirror 44 respectively reflect the laser beams that are incident thereto, towards directions corresponding to their swing angles. The aforementioned laser beam that is reflected by the mirror 38 is reflected by the second MEMS mirror 44 after being reflected by the first MEMS mirror 42. When projecting the image 10 onto the projection surface 8, the laser beam is irradiated onto the projection surface 8 in the horizontal direction and the vertical direction (that is to say two dimensionally) while scanning, by swing the first MEMS mirror 42 and the second MEMS mirror 44 in the horizontal direction and the vertical direction respectively.

As shown in FIG. 3, the projector 2 further includes a controller 46. The controller 46 controls driving currents respectively supplied to the first laser diode 20, the second laser diode 22 and the third laser diode 24 as well as controls swing angles of the first MEMS mirror 42 and the second MEMS mirror 44 according to image data that is transmitted from the outside.

### [1-3. Configuration of Optical Element]

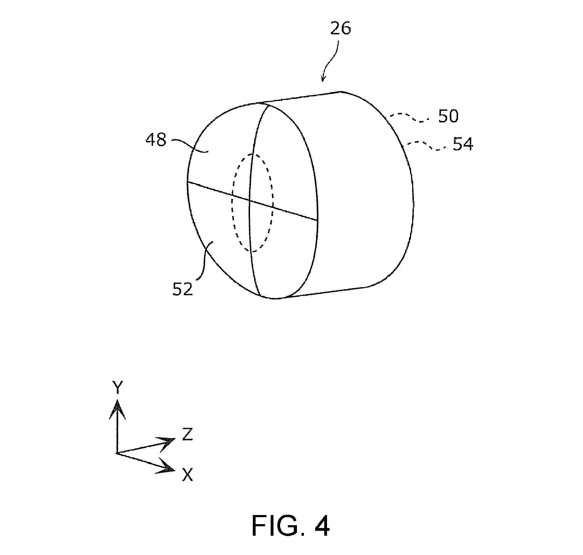

Next, a configuration of the first optical element 26 according to the first embodiment is described with reference to FIGs. 4 and 5. FIG. 4 is a perspective view illustrating a first optical element 26 according to a first embodiment. FIG. 5 is a side view illustrating a first optical element 26 according to a first embodiment. The configurations of the first optical element 26, the second optical element 28 and the third optical element 30 are the same, and therefore only the configuration of the first optical element 26 is described below.

As shown in FIGs. 4 and 5, the first optical element 26 has an incidence surface 48 for the laser beam emitted by the first laser diode 20 to be incident thereto, and an emitting surface 50 for emitting the light incident to the incidence surface 48, and is formed, for example, by a transparent resin or the like. The incidence surface 48 and the emitting surface 50 are disposed to face opposite to each other in an optical axis direction (Z axis direction). A thickness T of the first optical element 26 in the optical axis direction (namely, the thickness from the incident surface 48 to the emitting surface 50), for example, is 1.48 mm. In addition, a lens effective diameter D of the first optical element 26, for example, is 3.5 mm, and a numerical aperture (NA) of the first optical element 26, for example, is 0.47.

As shown in FIGs. 4 and 5, a first lens surface 52 having a convex shape is formed on the incident surface 48. A shape of the first lens surface 52 has a curvature in a first direction (Y axis direction), and does not have a curvature in a second direction (X axis direction) that is orthogonal to the first direction, and is a so-called cylindrical surface shape. A radius of curvature of the first lens surface 52 in the first direction, preferably is greater than or equal to +100 mm, and for example, is +130 mm. In FIG. 4, crossed solid lines on the first lens surface 52 are imaginary lines to represent the cylindrical surface shape clearly.

As shown in FIG. 5, a second lens surface 54 having a convex shape is formed on the emitting surface 50. A shape of the second lens surface 54 is an aspherical shape. A radius of curvature of the second lens surface 54, for example, is -1.33, a conic constant, for example, is -0.93, a 4^{th} order aspherical coefficient, for example, is -0.026, a 6^{th} order aspherical coefficient, for example, is 2.825 x 10⁻³, an 8^{th} order aspherical coefficient, for example, is -2.494 x 10 ⁻³, and a 10^{th} order aspherical coefficient, for example, is 9.922 x 10⁻⁵. An unnecessary aberration that is generated due to the cylindrical surface shape of the first lens surface 52 can be reduced by the aspherical shape of the second lens surface 54.

An orientation of the first optical element 26 is fixed relative to the first laser diode 20, such that the first direction of the first lens surface 52 is aligned with a long axis direction of the beam shape of the laser beam, and the second direction of the first lens surface 52 is substantially aligned with a short axis direction of the beam shape of the laser beam. In addition, a distance WD between the first optical element 26 and the first laser diode 20, for example, is 1.465 mm.

As shown in FIG. 5, the laser beam from the first laser diode 20, for example, is incident to the first lens surface 52 of the first optical element 26 while diverging with a radiation angle θ of about 50°. By setting the numerical aperture of the first optical element 26 as 0.47, the laser beam from the first laser diode 20 that is diverging with the radiation angle θ of about 50° can be incident to the first lens surface 52 effectively, and a utilization efficiency of the laser beam can be increased.

As shown in FIG. 5, the beam shape of the laser beam incident to the first lens surface 52 is expanded in the short axis direction by astigmatism generated in the laser beam through the first lens surface 52. The reasons are that the shape of the first lens surface 52 is a cylindrical surface, and a condensation property the second direction of the first lens surface 52 is lower than a condensation property in the first direction. In this way, the shape of the laser beam incident to the first lens surface 52 is shaped from the elliptic shape into a circular shape.

Then, the laser beam shaped by the first lens surface 52 is converted from a divergent beam into a parallel beam by being incident to the second lens surface 54. In this way, the beam shape of the laser beam emitted from the second lens surface becomes a parallel beam having a circular shape.

### [1-4. Effect]

Next, an effect that is achieved by the first optical element 26, the second optical element 28 and the third optical element 30 according to the first embodiment is described. As mentioned above, the first optical element 26, the second optical element 28 and the third optical element 30 have the beam shaping function and the collimating function. In this way, in comparison with the conventional case of disposing the shaping prism and the collimating lens additionally, the number of components can be reduced in an overall optical system that includes the first optical element 26, the second optical element 28 and the third optical element 30. As a result, the beam shape of the laser beam can be shaped while achieving miniaturization of the mentioned overall optical system.

### [1-5. Consideration of Configuration of Second Lens Surface]

In the first embodiment, the first lens surface 52 is formed on the incident surface 48, and the second lens surface 54 is formed on the emitting surface 50. However, conversely, the second lens surface 54 may be formed on the incident surface 48, and the first lens surface 52 may be formed on the emitting surface 50.

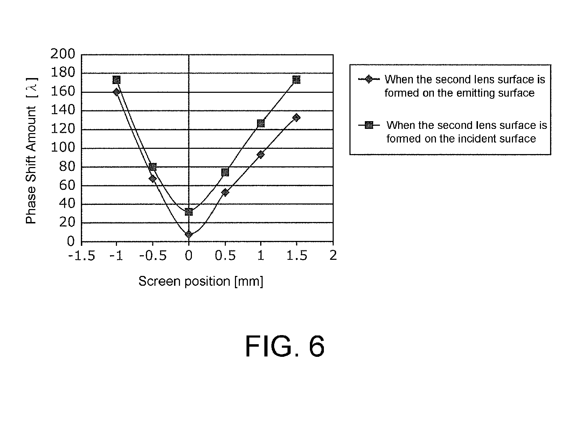

Here, with reference to FIG. 6, comparison of the light condensation property when the second lens surface 54 is formed on the emitting surface 50, and the light condensation property when the second lens surface 54 is formed on the incidence surface 48 is considered. FIG. 6 is a graph illustrating comparison results of the light condensation property when a second lens surface 54 is formed on an emitting surface 50, and the light condensation property when a second lens surface 54 is formed on an incidence surface 48.

In the comparison results shown in FIG. 6, a phase shift amount of the vertical axis is used as an indicator that represents the condensation property. That is to say, the closer the phase shift amount is to 0 at a screen position of 0mm, the higher the condensation property. Therefore, the light condensation property when the second lens surface 54 is formed on the emitting surface 50 may be understood to be higher than the light condensation property when the second lens surface 54 is formed on the incidence surface 48, as is apparent from to FIG. 6.

### [1-6. Consideration of Parameters of Optical Element]

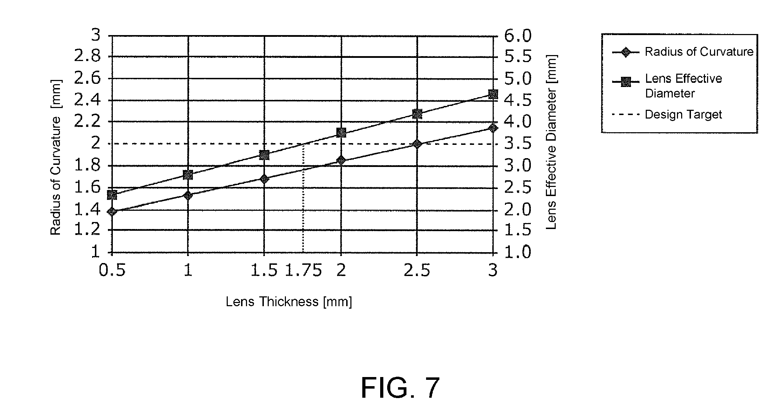

Next, parameters of the first optical element 26 will be considered with reference to FIG. 7. FIG. 7 is a graph illustrating a relationship of a lens thickness T of a first optical element 26 with a lens effective diameter D and with a radius of curvature of a second lens surface 54. However, in the graph shown in FIG. 7, a distance WD between the first optical element 26 and the first laser diode 20 is set to a fixed value (3.7 mm).

For example, in a case when the numerical aperture of the first optical element 26 is 0.47, and when the distance WD between the first optical element 26 and the first laser diode 20 is 3.7 mm, it is preferable to set the lens thickness T of the first optical element 26 to less than or equal to 1.75 mm, or, set the lens effective diameter D of the first optical element 26 to less than or equal to 3.5 mm to satisfy the relationship of the graph of FIG. 7. By setting the parameters of the first optical element 26 as aforementioned, miniaturization of the overall optical system can be achieved while the distance WD is secured.

### (Embodiment 2)

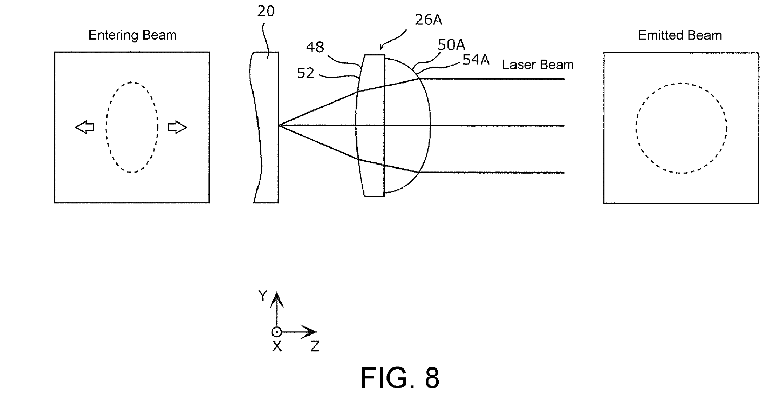

Next, a configuration of the first optical element 26A according to a second embodiment is described with reference to FIG. 8. FIG. 8 is a side view illustrating a first optical element 26A according to a second embodiment. In the following embodiments, the same reference numbers as the aforementioned first embodiment are used to describe the same components, and their description thereof is omitted.

In the first optical element 26A according to the second embodiment, a shape of a second lens surface 54A that is formed on the emitting surface 50 is different compared to the aforementioned first embodiment. Namely, as is shown in FIG. 7, a shape of the second lens surface 54A is a spherical shape. A radius of curvature of the second lens surface 54A, for example, is -1.48 mm.

Even with this configuration, similar to the aforementioned first embodiment, the laser beam that is shaped by the first lens surface 52 is converted from a divergent beam into a parallel beam by be incident to the second lens surface 54A. Therefore, the same effect as the aforementioned first embodiment can be achieved by the first optical element 26A according to the second embodiment.

### (Embodiment 3)

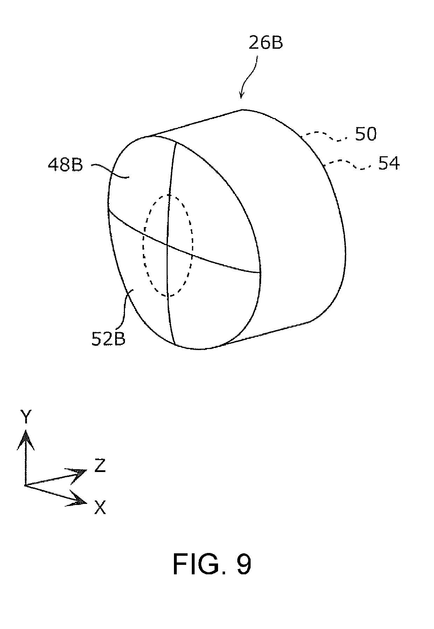

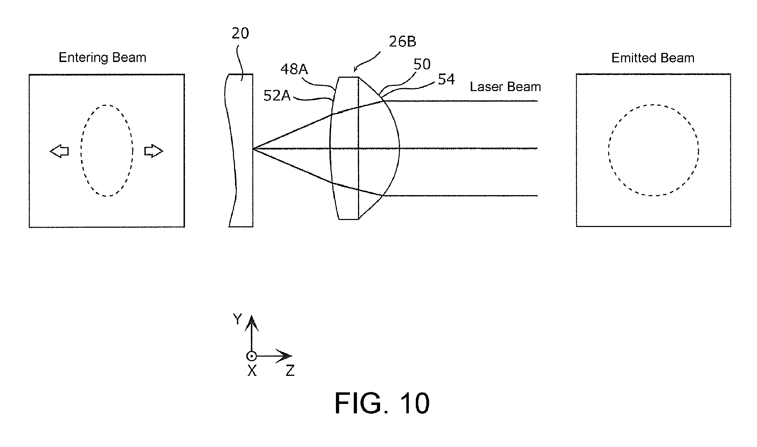

Next, a configuration of the first optical element 26B according to the third embodiment is described with reference to FIGs. 9 and 10. FIG. 9 is a perspective view illustrating a first optical element 26B according to a third embodiment. FIG. 10 is a side view illustrating a first optical element 26B according to a third embodiment.

In the first optical element 26B according to the third embodiment, a shape of a first lens surface 52B that has a convex shape formed on the incident surface 48B is different compared to the aforementioned first embodiment. That is to say, as shown in FIGs. 9 and 10, a shape of the first lens surface 52B has a first radius of curvature in a first direction (Y axis direction), and has a second radius of curvature in a second direction (X axis direction) that is orthogonal to the first direction, and is a so-called biconic surface shape. The first radius of curvature and the second radius of curvature are different in size. Preferably, a ratio of the first radius of curvature and the second radius of curvature is greater than or equal to 1:5. The first radius of curvature, for example, is +130 mm, and the second radius of curvature, for example, is +1380 mm. In FIG. 9, crossed solid lines on the first lens surface 52B are imaginary lines to more represent the biconic surface shape clearly.

Similar to the aforementioned first embodiment, a shape of the second lens surface 54 that is formed on the emitting surface 50 is an aspherical shape. A radius of curvature of the second lens surface 54, for example, is -1.331, a conic constant, for example, is -0.933, a 4^{th} order aspherical coefficient, for example, is -0.026, a 6^{th} order aspherical coefficient, for example, is 2.921 x 10 ⁻³, and an 8^{th} order aspherical coefficient, for example, is -2.511 x 10⁻³, and a 10^{th} order aspherical coefficient, for example, is 4.188 x 10⁻⁵.

A direction of the first optical element 26B is fixed relative to the first laser diode 20, such that the first direction of the first lens surface 52B is aligned with a long axis direction of the laser beam, and the second direction of the first lens surface 52B is aligned with a short axis direction of the laser beam.

Similar to the aforementioned first embodiment, the beam shape of the laser beam incident to the first lens surface 52B is expanded in the short axis direction by astigmatism that is generated in the laser beam through the first lens surface 52B. The reasons are that the shape of the first lens surface 52B is the biconic surface shape and a condensation property in the second direction of the first lens surface 52B is lower than a condensation property in the first direction. In this way, the shape of the laser beam that is incident to the first lens surface 52B is shaped from the elliptic shape into a circular shape. Furthermore, an unnecessary aberration that is generated due to a difference of the shape of the first lens surface 52B and the shape of the second lens surface 54 can be further reduced compared to the aforementioned first embodiment, by making the shape of the first lens surface 52B a biconic shape.

### (Other Variations)

The optical element and projector according to the first, the second and the third embodiments of the disclosure have been described above. However, the disclosure is not limited to the first to the third embodiments. For example, the aforementioned first to third embodiments may be suitably combined.

For example, in each of the above embodiments, examples were described where the projector 2 is mounted to the head up display device 4. However, this is not a limitation, and for example, the projector 2 may be adopted as a projector for projecting an image onto a screen that is disposed on, for example, a wall inside a room and the like.

For example, in each of the aforementioned embodiments, the head up display device 4 is mounted to the automobile 6. However, this is not a limitation, and for example, the head up display device 4 may be mounted to various types of transportation equipment such as an aircraft or a ship.

For example, in the aforementioned embodiments, the first lens surface 52 (52B) and the second lens surface 54 (54A) are both formed as a convex shape. However, this is not a limitation, and for example, at least one of the first lens surface 52 (52B) or the second lens surface 54 (54A) may be formed as a concave shape.

The disclosure, for example, may be adapted as an optical element mounted to a projector.

### Reference Numbers

- 2: Projector
- 4: Head Up Display Device
- 6: Automobile
- 8: Combiner
- 10: Image
- 12: Dashboard
- 14: Front Glass
- 16: Driver
- 18: Scenery
- 20: First Laser Diode
- 22: Second Laser Diode
- 24: Third Laser Diode
- 26, 26A, 26B: First Optical Element
- 28: Second Optical Element
- 30: Third Optical Element
- 32: First Dichroic Mirror

## Claims

1. A projector (2), **characterized in that** the projector (2) comprises:
a light source (20), emitting a laser beam;
an optical element (26), which the laser beam emitted by the light source (20) passes through; and
a projection component (40), projecting an image (10) onto a projection surface (8) by irradiating the laser beam that is emitted from the optical element (26) onto the projection surface (8) while scanning,
the optical element (26) comprises:
an incident surface (48), where the laser beam emitted by the light source (20) is incident; and
an emitting surface (50), where the laser beam incident to the incidence surface (48) is emitted;
wherein a first lens surface (52) in configured to shape a beam shape of the laser beam that is emitted by the light source (20) from an elliptic shape into a circular shape by astigmatism generated in the laser beam that is emitted by the light source (20), is formed on one of the incident surface (48) and the emitting surface (50), and
a second lens surface (54) is configured to convert the laser beam that is emitted by the light source (20) from a divergent beam into a parallel beam, is formed on the other one of the incident surface (48) and the emitting surface (50).

2. The projector (2) as claimed in claim 1, wherein the beam shape of the laser beam emitted by the light source (2) is shaped from the elliptic shape into the circular shape by expanding the beam shape of the laser beam from the light source (2) in a short axis direction.

3. The projector (2) as claimed in claim 1 or 2, wherein the laser beam shaped by the first lens surface (52) is converted from a divergent beam into a parallel beam by being incident to the second lens surface (54).

4. The projector (2) as claimed in any one of claims 1 to 3, wherein the first lens surface (52) is formed on the incident surface (48) and the second lens surface (54) is formed on the emitting surface (50), or
the first lens surface (52) is formed on the emitting surface (50) and the second lens surface (54) is formed on the incident surface (48).

5. The projector (2) as claimed in any one of claims 1-4, wherein a shape of the first lens surface (52) is a cylindrical surface shape, and a shape of the second lens surface (54) is a spherical shape or an aspherical shape.

6. The projector (2) as claimed in any one of claims 1-5, wherein the first lens surface (52) has a curvature in a first direction that is orthogonal to an optical axis direction, and does not have a curvature in a second direction that is orthogonal to the optical axis direction and the first direction.

7. The projector (2) as claimed in any one of claims 1-4, wherein a shape of the first lens surface (52) is a biconic surface shape, and a shape of the second lens surface (54) is a spherical shape or an aspherical shape.

8. The projector (2) as claimed in any one of claims 1-4 and 7, wherein the first lens surface (52) has a first radius of curvature in a first direction that is orthogonal to an optical axis direction, and has a second radius of curvature in a second direction that is orthogonal to the optical axis direction and the first direction, and the first radius of curvature and the second radius of curvature are different.

9. The projector (2) as claimed in claim 8, wherein a ratio of the first radius of curvature and the second radius of curvature is greater than or equal to 1:5.

10. The projector (2) as claimed in any one of claims 1-9, wherein a numerical aperture of the optical element (26) is greater than or equal to 0.47.

11. The projector (2) as claimed in claim 10 wherein a lens effective diameter (D) of the optical element (26) is less than or equal to 3.5 mm.

12. The projector (2) as claimed in claim 10, wherein a lens thickness (T) of the optical element (26) from the incident surface (48) to the emitting surface (50) is less than or equal to 1.75 mm.

13. The projector (2) as claimed in claim 12, wherein a radius of curvature of the first lens surface (52) in a first direction that is orthogonal to an optical axis direction is greater than or equal to 100 mm.

14. The projector (2) as claimed in any one of claims 1-13, wherein the optical element (26) is fixed relative to the light source (20), such that a first direction of the first lens surface (52) is aligned with a long axis direction of the beam shape of the laser beam, and the second direction of the first lens surface (52) is substantially aligned with a short axis direction of the beam shape of the laser beam.

15. The projector (2) as claimed in any one of claims 1-14, wherein the light source (20) and the optical element (26) are respectively disposed in plural, wherein each of the plurality of light sources (20) emits a laser beam having a wavelength that is different from each other, and each of the plurality of optical elements (26) is disposed corresponding to each of the plurality of light sources (20).
